# EUROPÄISCHE PATENTSCHRIFT

(11) **EP 0 898 447 B1**
(45) Veröffentlichungstag und Bekanntmachung des Hinweises auf die Patenterteilung: **22.08.2001**
(21) Anmeldenummer: 97920649.7
(22) Anmeldetag: 10.04.1997
(51) Int. Cl.: A01J 5/007

(54) **VERFAHREN ZUM MASCHINELLEN MILCHENTZUG**
MECHANICAL MILKING PROCESS
PROCEDE MECANIQUE DE TRAITE

(30) Priorität: 11.04.1996 DE 19614377
(43) Veröffentlichungstag der Anmeldung: 03.03.1999
(73) Patentinhaber: Maier, Jakob, 86842 Türkheim (DE)
(72) Erfinder: Laub-Maier, Maria, 86842 Türkheim (DE)
(74) Vertreter: Grünecker, Kinkeldey, Stockmair & Schwanhäusser Anwaltssozietät
(86) Internationale Anmeldenummer: EP9701795
(87) Internationale Veröffentlichungsnummer: WO9737527

(56) Entgegenhaltungen:
- EP-A- 0 522 497
- WO-A-89/08384
- WO-A-92/22197

## Beschreibung

Die Erfindung betrifft ein Verfahren zum maschinellen Milchentzug, bei dem während des Abmelkens der Milch unterhalb der Zitze ein im wesentlichen konstantes Melkvakuum anliegt, wobei die abgemolkene Milch mit Hilfe eines niedrigen, im wesentlichen konstanten, in die Milchabführleitung eingelassenen Luftstroms abtransportiert wird und in einem zwischen dem die Zitze umgebenden Zitzengummi und einem Melkbecher gebildeten Pulsatorraum der Druck jeweils derart gesteuert wird, daß sich während einer Zitzen-Entlastungsphase eine Druckdifferenz in bezug auf das unterhalb der Zitze anliegende Melkvakuum einstellt.

Eine Anordnung der eingangs genannten Art ist als firmeninterner Stand der Technik bekannt.

Ein solches maschinelles Melkverfahren wird z.Zt. in vielen Stallungen angewandt. Bei diesem Verfahren wird jeweils ein sogenannter Melkbecher zum Abmelken an die Zitzen angesetzt. Der Melkbecher besteht aus einer äußeren steifen Melkbecherhülse und einem elastischen schlauchförmigen Einsatz, dem sogenannten Zitzengummi. In den elastischen Schlauchteil des Zitzengummis steht während des Melkens die Zitze vor. Zwischen der Außenseite des Schlauchteils des Zitzengummis sowie der Innenseite der Melkbecherhülse wird ein sogenannter Pulsatorraum gebildet, der von einem Pulsator während des Melkens abwechselnd in einer sogenannten Abmelkphase unter Vakuum gesetzt und während einer sogenannten Zitzen-Entlastungsphase unter Atmosphärendruck gesetzt wird. Das untere Ende der Zitze steht über einen kurzen Schlauch mit einem sogenannten Sammelstück in Verbindung, in das die kurzen Leitungen der meist vier Melkbecher, die an die jeweiligen Zitzen angesetzt sind, münden. Das Sammelstück steht über einen sogenannten langen Milchschlauch mit einer Milchabtransportleitung in Verbindung. Ein sogenanntes Melkvakuum liegt über die Milchabtransportleitung, den langen Milchschlauch, das Sammelstück und die jeweils kurzen Schläuche unterhalb der Zitze an. Der Abtransport der Milch wird dadurch erreicht, daß unterhalb der Zitze in den kurzen Schlauch oder zumeist in das Sammelstück kontinuierlich ein geringer, unter Atmosphärendruck stehender Luftstrom eingelassen wird.

Der Abtransport der Milch hängt in entscheidendem Maße auch vom Innenquerschnitt der verwandten Schläuche ab, an die das Melkvakuum angelegt wird. Schläuche mit geringerem Innendurchmesser von etwa 10 - 12 mm haben hier den Vorteil eines besonders reibungslosen Abtransports der Milch. Auf der anderen Seite haben jedoch Milchtransportleitungen mit geringem Innendurchmesser den Nachteil eines hohen Abfall des Melkvakuums über die Leitungen, so daß das tatsächlich unterhalb der Zitze anliegende Vakuum so niedrig wird, daß gegebenenfalls die Melkbecher von der Zitze abfallen, die Melkzeit wesentlich verlängert wird oder keine ausreichende Ausmelkung des Euters mehr gewährleistet sind. Diese und andere Gründe haben dazu geführt, daß man mehr und mehr zu Schläuchen mit größerem Innendurchmesser und Sammelstücken mit größeren Volumina übergegangen ist, um auf diese Weise in jedem Falle sicherzustellen, daß über die Milchschläuche nach Möglichkeit kein Vakuumverlust mehr stattfindet, so daß das nominelle Melkvakuum tatsächlich auch unterhalb der Zitze anliegt, ohne daß sich wesentliche Vakuumschwankungen unterhalb der Zitze ergeben.

Obwohl in diesen Systemen mit größeren Innenquerschnitten der Milchtransportschläuche sowie eines größeren Volumens des Sammelmelkstücks keine veränderten Melkvakua verwandt wurden, wie sie bisher mit Erfolg angewandt wurden, nämlich etwa zwischen 35 kPa und 50 kPa, zeigen sich bei dem neuen System Veränderungen der Zitzenspitze. Es wurde gegen alle Erwartungen festgestellt, daß sich die Zitzenspitzen nach außen stülpen und bei längerer Anwendung eines vorgeschriebenen Melkzeuges auch nach außen umgestülpt blieben. Das heißt, es ergab sich, daß die Zitzenspitzen nicht mehr selbsttätig voll schließbar waren, sondern geöffnet blieben. Eine solche Zitzenspitze ist aber einer extremen Gefahr ausgesetzt, daß Bakterien ein leichtes Angriffsfeld haben und daß sich hierdurch unliebsame Eutererkrankungen als Folge einstellen. Eine Folge der Veränderung der Zitzenspitze und der dadurch begünstigten Einwirkung von Bakterien ist es, daß eine Milch mit einem erhöhten Gehalt an somatischen Zellen geliefert wird. Da aber bei der Beurteilung der Milch von den jeweiligen Milchabnehmern die Qualität der Milch danach bewertet wird, wie hoch der Zellengehalt der Milch ist, führt dies zu einer Qualitätsminderung der Milch, die sich in erheblich erniedrigten Milchpreisen ausdrückt.

EP 0 522 497 beschreibt einen Abschluß für eine an einer Vakuumquelle angeschlossenen Milchleitung, der während der Entlastungsphase im abgeschlossenen Raum zur Zitze hin einen Überdruck verhindert bzw. ein Vakuum von vorzugsweise -5 bis - 15 kPa aufrechterhält.

WO 92/22197 offenbart die Verwendung einer dünnwandigen, nicht dehnbaren Zwischenlage im Zusamenwirken mit Überdruck während der Entlastungsphase. Ferner dient die dünnwandige verformbare Zwischenlage als ein Druckschalterelement zur Begrenzung des Unterdrucks unterhalb der Zitzenspitze.

Der vorliegenden Erfindung lag deshalb die Aufgabe zugrunde, das Auftreten von Zitzenspitzenveränderungen bei den eingangs beschriebenen bekannten Melksystemen zu vermeiden.

Diese Aufgabe wurde ausgehend von einem Verfahren der eingangs erwähnten Art erfindungsgemäß dadurch gelöst, daß die Druckdifferenz während der Zitzen-Entlastungsphase derart gewählt wird, daß unter Berücksichtigung einer je nach der Art des verwendeten Zitzengummis für das Einfalten des Zitzengummis notwendigen Druckdifferenz eine Druckdifferenz zwischen 5 kPa und 35 kPa auf die Zitze einwirkt.

Es wurde festgestellt, daß offensichtlich in der Zitzen-Entlastungsphase eine zu hohe Druckdifferenz auf die Zitzenspitze einwirkt, die letztlich zu einem nach auswärts Umstülpen der Zitzenspitze führt. Eine solche Veränderung der Zitzen wurde insbesondere dann festgestellt, wenn bei den neu entwickelten Melksystemen mit Schläuchen mit großem inneren Durchmesser das Vakuum unterhalb der Zitze praktisch dem Nennmelkvakuum entsprach und der Druck im Pulsatorraum so gesteuert wurde, daß sich während der Entlastungsphase Atmosphärendruck im Pulsatorraum einstellte.

Die Verbesserungen in bezug auf eine geringere Veränderung der Zitzenspitze waren umso besser, wenn die auf die Zitze wirkende Druckdifferenz lediglich zwischen 5 kPa und 30 kPa und insbesondere nur zwischen 5 kPa und 20 kPa lag. Ein besonders günstiger Wert der Druckdifferenz, der einerseits eine gute und ausreichende Druckentlastung der Zitzenspitze gewährleistete und andererseits eine größtmögliche Gewähr für die Erhaltung einer gesunden Zitzenspitze bot, lag bei etwa 20 kPa.

Bei der Bestimmung der auf die Zitze tatsächlich einwirkende Druckdifferenz ist zu berücksichtigen, daß diese nicht der Druckdifferenz gleichzusetzen ist, die zwischen dem Druck im Pulsatorraum während der Zitzen-Entlastungsphase und dem unterhalb der Zitzenspitze anliegenden Vakuum herrscht. Vielmehr ist zu berücksichtigen, daß von der zuletzt angegebenen Druckdifferenz ein bestimmter Anteil der Druckdifferenz dazu aufgewandt werden muß, um den röhrenförmigen Teil des Zitzengummis überhaupt zu kollabieren, d.h. zum Einfalten zu bringen. Man spricht hier von dem sogenannten Einfaltdruck, der in Abhängigkeit von dem jeweiligen Material sowie der Dimensionierung des jeweiligen Zitzengummis unterschiedlich sein kann. So liegen die Einfaltdrücke von sogenannten steifen Zitzengummis zwischen 12 kPa und 24 kPa, während die Einfaltdrücke von weichen Zitzengummis etwa zwischen 5 kPa und 11 kPa liegen. Dieser jeweilige Einfaltdruck des Zitzengummis muß also berücksichtigt werden, wenn unter der Annahme eines konstanten Melkvakuums unter der Zitzenspitze der maximale Druck im Pulsatorraum während der Zitzen-Entlastungsphase eingestellt wird, der zu einer auf die Zitze wirkenden Druckdifferenz führen soll, die innerhalb des jeweils angegebenen Druckbereichs liegt.

Weitere, in den Ansprüchen beschriebene Ausführungsformen werden ausdrücklich in die Beschreibung einbezogen.

Im folgenden soll die Erfindung näher anhand der Zeichnungen erläutert werden.

In den Zeichnungen zeigen:
- Fig. 1: schematisch einen an eine Zitze angesetzten Melkbecher, der mit einem sogenannten Sammelstück in Verbindung steht,
- Fig. 2: schematisch eine Zitze, die im Zitzen-Entlastungstakt von dem rohrförmigen Teil eines sogenannten steifen Zitzengummis umschlossen wird,
- Fig. 3: eine ähnliche Darstellung wie in Fig. 2, wobei der Zitzengummi aus einem sogenannten weichen Gummi besteht,
- Fig. 4: ein Diagramm des Druckverlaufes im Pulsatorraum für ein Melkzeug nach dem bisherigen Stand der Technik und im Vergleich dazu der Kurvenverlauf des Druckes im Pulsatorraum gemäß der Erfindung, und
- Fig. 5: eine Darstellung des Druckverlaufes im Pulsatorraum gemäß der vorliegenden Erfindung, wobei der maximale Unterdruck im Pulsatorraum nicht gleichzeitig mit dem Melkvakuum zusammenfällt.

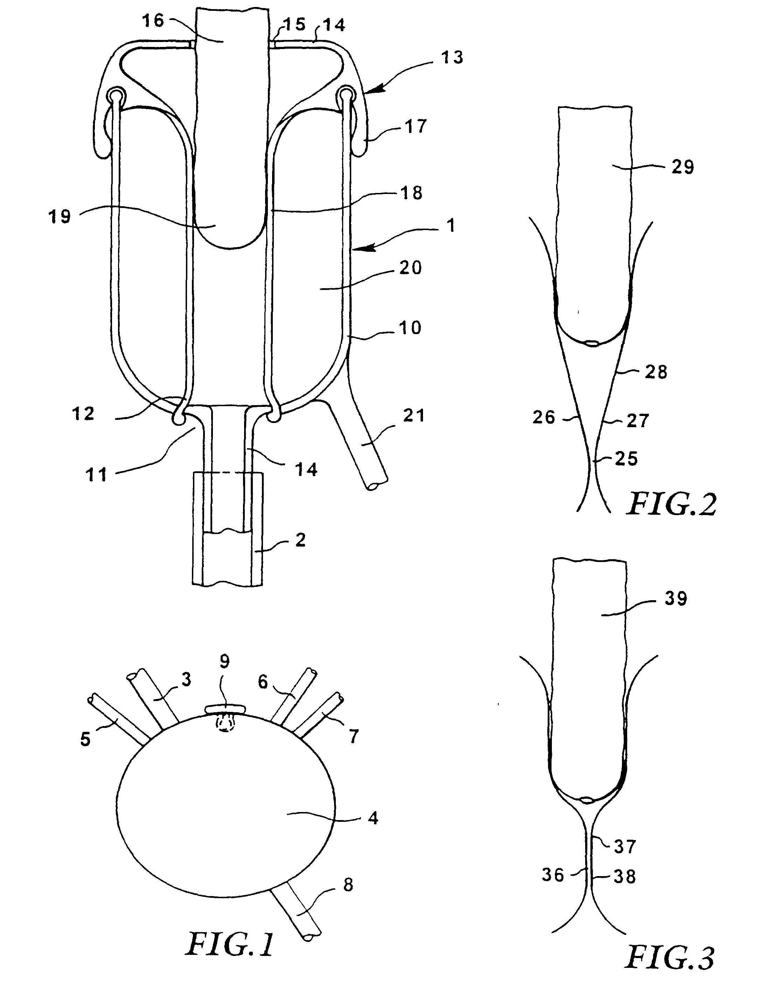

In Fig. 1 ist mit 1 ein an eine Zitze angesetzter Melkbecher bezeichnet, der über einen kurzen Schlauch 2 mit einem Einlaß 3 des schematisch dargestellten Sammelstücks 4 verbunden ist. Die übrigen nicht dargestellten Melkbecher der übrigen Zitzen sind mit den Einlässen 5, 6 und 7 verbunden, was nicht im einzelnen dargestellt ist, und diese Einlässe sind mit dem Inneren des Sammelstücks 4 verbunden. Das Sammelstück 4 ist über einen Auslaß 8 mit dem sogenannten langen Milchschlauch verbunden, der seinerseits mit der Milchabsführleitung verbunden ist, an der das Nennmelkvakuum anliegt. An dem Sammelstück 4 ist beim vorliegenden Ausführungsbeispiel ein Ventil, das lediglich schematisch dargestellt ist, vorgesehen, das einen kontinuierlichen niedrigen Luftstrom unter Atmosphärendruck in das Sammelstück 4 zum Abtransport der Milch einläßt.

Der Melkbecher 1 besteht aus einer im wesentlichen zylinderförmigen Melkbecherhülse 10, die an ihrem unteren Ende eine verengte Öffnung 11 aufweist, in der das untere Ende 12 des Zitzengummis 13 mit Hilfe eines Verbindungsstückes 14 eingeklemmt ist. Das Verbindungsstück 14 ist mit dem kurzen Milchschlauch 2 verbunden. Das Zitzengummi 13 besteht aus einem Kopf 14 mit einer zentralen Öffnung 15, in die die Zitze 16 eingeführt ist. An den Kopf 14, der dichtend über Vorsprünge 17 auf der Außenseite der Melkbecherhülse 10 anliegt, schließt sich ein rohrförmiger Teil 18 an, der insbesondere das untere Ende 19 der Zitze umgibt. Zwischen der Außenseite des rohrförmigen Teils 18 des Zitzengummis und der Innenwand der Melkbecherhülse 10 ist ein ringförmiger Pulsatorraum 20 gebildet. Dieser steht über eine Leitung 21 mit einem nicht näher dargestellten Pulsator in Verbindung, der den Pulsatorraum 20 zyklisch zwischen zwei Druckgrenzwerten hin- und hersteuert. In Fig. 1 ist der Melkbecher in dem Zustand dargestellt, in dem sich der Melkzyklus in der Saugphase befindet. In diesem Zustand ist der Druck im Pulsatorraum 20 derart abgesenkt in bezug auf das unterhalb der Zitze anliegende Melkvakuum, daß sich der rohrförmige Teil des Zitzengummis in seinem rohrförmigen, d.h. nicht kollabierten Zustand befindet.

In den Figuren 2 und 3 sind jeweils Zitzenspitzen 29 bzw. 39 dargestellt und es ist schematisch jeweils der rohrförmige Teil des Zitzengummis 28 bzw. 38 im kollabierten, d.h. eingefalteten Zustand dargestellt. Zu diesem Zeitpunkt herrscht im Pulsatorraum ein höherer Druck als das unterhalb der Zitze wirksame Melkvakuum, so daß der rohrförmige Teil des Zitzengummis seine Rohrform verliert und in Form eines abgequetschten Rohres zusammenfällt. Der Unterschied zwischen den Figuren 2 und 3 besteht darin, daß in der Fig. 2 ein sogenannter steifer Gummi verwandt wurde, während in Fig 3 das Verhalten eines sogenannten weichen Gummis dargestellt ist. Wie aus Fig. 2 sehr gut ersichtlich ist, berühren die einander gegenüberliegenden Seiten 26 und 27 des Zitzengummis sich etwa im Punkt 25, der in einem verhältnismäßig großen Abstand unterhalb der Zitzenspitze 29 liegt. In diesem Falle bilden die Seiten 26 und 27 ein von der Spitze 25 ausgehendes spitzes Dreieck und die beiden Schenkel dieses Dreiecks drücken praktisch keilförmig auf die einander gegenüberliegenden Seiten der Zitzenspitze 29 etwa in der Form von starren Schenkeln.

Bei dem in Fig. 3 dargestellten weichen Gummi wird der rohrförmige Zitzengummi im kollabierten Zustand derart abgequetscht, daß die einander gegenüberliegenden Seiten 36 und 37 über eine wesentlich längere Strecke gegeneinander anliegen. Der weiche Zitzengummi legt sich praktisch über eine größere Fläche an die untere Zitzenspitze anschmiegend gegen diese an. Auf diese Weise wird ein gleichmäßiger Druck auf die Fläche der unteren Zitze ausgehend von dem Ende des Strichkanals aus ausgeübt.

Aus einem Vergleich der Fig. 2 und 3 läßt sich ableiten, weshalb bei der Verwendung von weichen Zitzengummis offensichtlich auch noch höhere Drücke im Zitzen-Entlastungstakt keine so gravierenden Euterschädigungen bewirken wie steifere Zitzengummis. Bei einem steiferen Zitzengummi, wie es in Fig. 2 gezeigt ist, wirkt der zusammenfallende rohrförmige Teil 28 des Zitzengummis praktisch wie eine Zange mit einem Drehpunkt im Punkte 25, die mit ihren Schenkeln 26 und 27 auf zwei gegenüberliegende Seiten der Zitze drückt, was zwangsläufig bei höheren Drücken zu einem Auspressen und nach außen Umstülpen des unteren Endes des Strichkanals führen muß. Demgegenüber legt sich, wie aus Fig. 3 ersichtlich, ein weicher Zitzengummi im Zitzen-Entlastungstakt stützend um das ganze untere Ende der Zitze herum, so daß auch noch höhere Drücke als bei einem steifen Zitzengummi auf die Zitze ausgeübt werden können, ohne daß dies zu bleibenden Schädigungen führt.

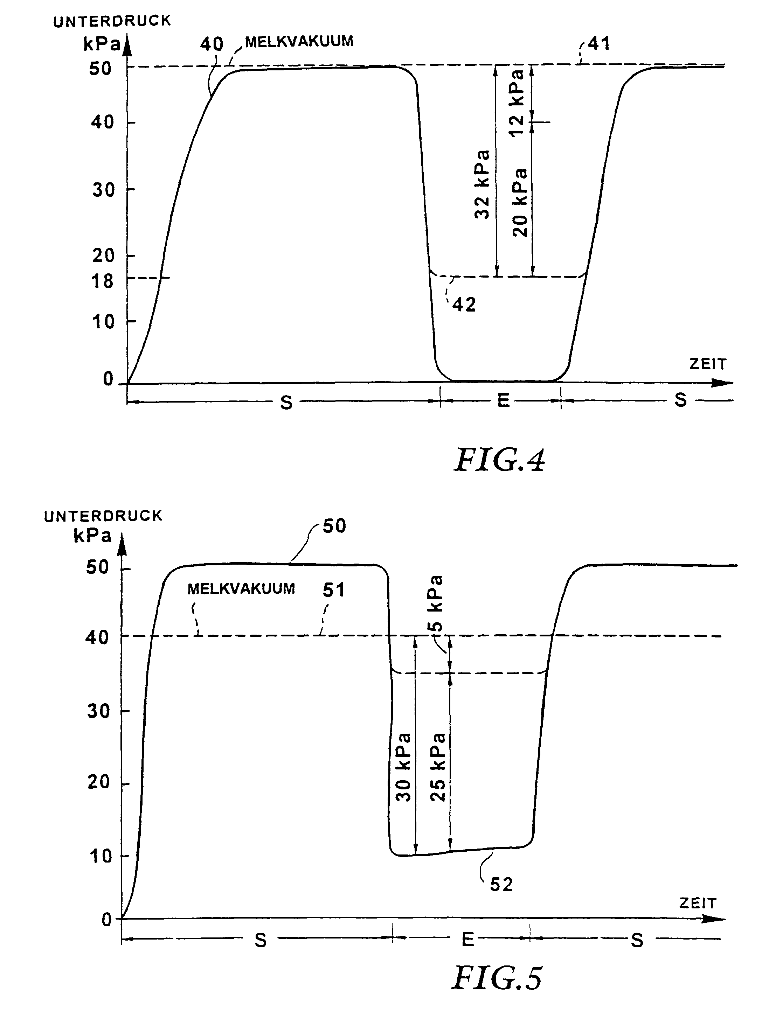

In Fig. 4 ist mit der ausgezogenen Kurve 40 der zeitliche Verlauf des Druckes in dem Pulsatorraum 20 dargestellt, wie er bei den oben beschriebenen Melksystemen üblich ist. Das Melkvakuum unterhalb der Zitze liegt bei diesem Beispiel bei einem Unterdruck von 50 kPa. Dieses an sich verhältnismäßig konstante Melkvakuum ist durch die stichlinierte Linie 41 dargestellt. Auf der Zeitachse sind die sich zyklisch abwechselnden Phasen, nämlich Saugtakt "S" und Entlastungstakt "E", in ihren zeitlichen Abschnitten dargestellt. Während des Saugtaktes steigt der Unterdruck von praktisch Atmosphärendruck oder dem Unterdruck Null auf den Unterdruck 50 kPa und bleibt während eines längeren Zeitraumes auf diesem Wert, bevor er am Ende des Saugtaktes wieder auf den Unterdruck Null abfällt. Zumindest während des Zeitraumes, zu dem der Unterdruck im Pulsatorraum 50 kPa beträgt und somit gleich dem Melkvakuum ist, wirkt auf der Innen- wie auf der Außenseite des rohrförmigen Teils des Zitzengummis gleicher Druck, so daß dieser Teil des Zitzengummis seine Rohrform einnimmt, wodurch die abgesaugte Milch unbehindert abfließen kann. Während des Entlastungstaktes "E" liegt der Unterdruck im Pulsatorraum auf dem Wert Null, d.h. im Pulsatorraum herrscht Atmosphärendruck. Während dieser Zeit ist die Druckdifferenz zwischen dem Melkvakuum unterhalb der Zitze und dem Innenraum des Pulsatorraums am größten, d.h. sie beträgt im vorliegenden Ausführungsbeispiel 50 kPa. Zieht man von diesem Wert den Einfaltdruck des jeweils verwandten Zitzengummis ab der bei weichen Gummis zwischen etwa 5 bis 11 kPa und bei steifen Gummis zwischen 12 und 24 kPa liegt, so ergibt sich bei weichen Gummis ein Druck von 38 bis 45 kPa und bei steifen Gummis von 26 bis 38 kPa. Diese auf die Zitze wirkenden Drücke sind zu hoch. Dies gilt insbesondere für die neuen Rinderzüchtungen. Die Zucht wurde ausgerichtet auf Kühe mit hoher Milchleistung und hohem Milchfluß während des Melkens. Dies hat zu Kühen mit verhältnismäßig kurzen Zitzen geführt, die im Gegensatz zu den früheren verhältnismäßig fleischigen Zitzenenden nunmehr verhältnismäßig dünne Zitzenenden aufweisen, die sozusagen ohne jegliche Polsterung sind. Diese sehr dünnen Zitzenspitzen sind offensichtlich besonders gefährdet in bezug auf überhöhte Druckbelastungen.

In dem in Fig. 4 gezeigten Beispiel wurde nunmehr bei einem Melksystem der eingangs beschriebenen Art ein Zitzengummi mit einem Einfaltdruck von 12 kPa gewählt. Dieser Einfaltdruck entspricht einem Zitzengummi, das am unteren Rande des Bereiches der steifen Zitzengummis liegt, wenn man solche Zitzengummis als steife Zitzengummis bezeichnet, deren Einfaltdrucke in einem Bereich zwischen 12 kPa und etwa 24 kPa liegen. Demgegenüber sind solche Zitzengummis als weiche Zitzengummis anzusehen, deren Einfaltdruck im Bereich zwischen 5 kPa und 11 kPa liegen. Bei einem Melkvakuum unterhalb der Zitze von etwa 50 kPa wurde der Druck im Pulsatorraum derart gesteuert, daß während der Saugphase "S" das Vakuum im Pulsatorraum maximal bis auf 50 kPa anstieg, während das Vakuum in der Entlastungsphase "E" entsprechend der in Fig. 4 gestrichelt gezeichneten Linie 42 lediglich auf 18 kPa absank, um dann im nächsten Zyklus in der Saugphase wieder auf 50 kPa anzusteigen. Für den Entlastungstakt ergab sich somit zwischen dem Druck im Pulsatorraum und dem Melkvakuum unterhalb der Zitze eine Druckdifferenz von 32 kPa. Berücksichtigt man hierbei, daß ein Druck von 12 kPa notwendig ist, um den rohrförmigen Teil des Zitzengummis im Entlastungstakt zu kollabieren, so ergibt sich, daß im Entlastungstakt maximal eine Druckdifferenz von 20 kPa zwischen der Außenseite des rohrförmigen Zitzengummis und dem Druck unterhalb der Zitzenspitze wirksam waren und auf die Zitzenspitze drückten. Es zeigte sich, daß unter diesen Bedingungen auch bei längerem Melken keine Veränderungen der Zitzenspitze, gerade bei sehr dünnen Zitzen, auftraten.

Bei dem in Fig. 5 dargestellten Ausführungsbeispiel gibt die ausgezogene Kurve 50 den Verlauf des Drucks in dem Pulsatorraum in Abhängigkeit von der Zeit wieder. Bei diesem Ausführungsbeispiel wurde ein Zitzengummi verwandt, das als extrem weich zu bezeichnen ist und lediglich einen Einfaltdruck von 5 kPa aufwies. Ferner wurde bei diesem Ausführungsbeispiel ein Melkvakuum unterhalb der Zitze von ungefähr 40 kPa verwandt, das als im wesentlichen konstant angesehen werden konnte. Aus diesem Grunde ist das Melkvakuum in Fig. 5 als eine stichlinierte Linie auf konstantem Niveau eingezeichnet. Ferner wurde bei diesem Beispiel in dem Pulsatorraum während der Saugphase "S" ein höhrerer Unterdruck von 50 kPa im Verhältnis zu dem Melkvakuum von 40 kPa angewandt. Dies führte während des Maximums der Saugphase zu einem nach außen gerichteten Zug auf den röhrenförmigen Teil des Zitzengummis, der diesen versuchte weiter aufzublähen.

In der Entlastungphase "E" wurde das Vakuum in dem Pulsatorraum lediglich auf einen Unterdruck von 10 kPa (siehe Linie 52 des Druckverlaufs) abgesenkt. Dadurch ergab sich, daß in der Entlastungsphase zwischen dem Pulsatorraum und dem Melkvakuum unterhalb der Zitze eine Druckdifferenz von 30 kPa herrschte. Berücksichtigt man, daß ein Druck von 5 kPa notwendig war, um das Zitzengummi in den kollabierten Zustand zu bringen, so verblieb eine Druckdifferenz von 25 kPa, die als Druck auf die Zitze in der Entlastungsphase wirkte.

Allgemein wurde gefunden, daß bei einem Melkvakuum von 40 kPa unterhalb der Zitze und bei der Verwendung von steifen Zitzengummis mit einen Einfaltdruck zwischen 12 und 24 kPa sich ein Druck auf die Zitzen im Entlastungstakt von 20 bis 10 kPa als annehmbarer Druck herausstellte. Hierbei gilt ein Druck von 20 kPa für ein Zitzengummi mit etwa 12 kPa Einfaltdruck, während ein Druck von 10 kPa für ein sehr steifes Zitzengummi mit einem Einfaltdruck von 24 kPa zu sehen ist. Hierin spiegelt sich die Tendenz wider, daß die Zitzengummis um so stärker zangenartig auf die Zitze einwirken, je steifer sie sind, d.h. je höher ihr Einfaltdruck ist. Je steifer ein Zitzengummi ist, um so geringer ist deshalb die noch tolerierbare Druckdifferenz, die in der Entlastungsphase auf die Zitze einwirken darf. Wählt man wiederum ein Melkvakuum von 40 kPa so ergibt sich in ähnlicher Weise für die sogenannten weichen Zitzengummis, d.h. Zitzengummis mit einem Einfaltdruck zwischen 5 und 11 kPa, daß hier die Druckdifferenz vorzugsweise zwischen 25 und 20 kPa liegen sollte, d.h. etwa 25 kPa bei einem Zitzengummi mit 5 kPa Einfaltdruck und 20 kPa bei einem Zitzengummi mit einem Einfaltdruck von 11 kPa. Auch hier zeigt sich die Tendenz, daß die Druckdifferenz um so höher gewählt werden kann, je weicher das Zitzengummi ist, so daß es sich um so besser an die Zitze anschmiegen kann, wodurch erreicht wird, daß ein gleichmäßiger Druck auf eine möglichst große Fläche der Zitzenspitze bis möglichst hin zum Strichkanal ausgeübt wird.

Verwendet man ein höheres Melkvakuum von zum Beispiel 50 kPa, so hat sich gezeigt, daß hier offensichtlich zur besseren Entlastung von einem höheren, unter der Zitze wirksamen Melkvakuum eine höhere Druckdifferenz zulässig ist und gegebenenfalls auch erwünscht sein kann. Unter Verwendung von steifen Zitzengummis mit einem Einfaltdruck zwischen 12 und 24 kPa ergab sich somit ein Bereich, in dem die auf die Zitze wirkende Druckdifferenz liegen kann zwischen 30 kPa und 20 kPa, wiederum in bezug auf den niedrigsten bzw. höchsten Wert des Einfaltdruckes des Zitzengummis.

Wiederum unter Anwendung eines Melkvakuums von 50 kPa ergab sich in gleicher Weise für sogenannte weiche Zitzengummis mit einem Einfaltdruck zwischen 5 und 11 kPa ein noch annehmbarer Bereich für die auf die Zitzenspitze wirkende Druckdifferenz im Entlastungstakt von 35 kPa bis 30 kPa.

Wird ein Melkvakuum von 35 kPa unterhalb der Zitze verwandt, so liegen bei Verwendung von Zitzengummis mit einem Einfaltdruck zwischen 12 und 24 kPa die maximal zulässigen Druckdifferenzen bei 20 bis 10 kPa, jedoch vorzugsweise bei 15 bis 5 kPa. Werden Zitzengummis mit einem Einfaltdruck zwischen 5 und 11 kPa verwandt, so beträgt bei der Verwendung eines Melkvakuums von 35 kPa die maximale Druckdifferenz 25 bis 20 kPa, jedoch vorzugsweise 20 bis 15 kPa.

Wie bereits oben erwähnt, können bei einem größeren Melkvakuum unter der Zitze auch höhere maximale Druckdifferenzen zulässig sein. Lediglich um die Abhängigkeit der Änderungen der maximal zulässigen Druckdifferenz von dem Melkvakuum aufzuzeigen, sollen hier Bereiche für drei verschiedene Zitzengummis mit verschiedenen Einfaltdrucken angegeben werden. Wird das Melkvakuum in einem Bereich zwischen 35 und 50 kPa gewählt, so liegt bei Verwendung eines Zitzengummis mit einem Einfaltdruck von 24 kPa die maximal zulässige Druckdifferenz in Abhängigkeit vom Melkvakuum zwischen 5 und 20 kPa, bei Verwendung eines Zitzengummis mit einem Einfaltdruck von 11 kPa zwischen 20 und 30 kPa und vorzugsweise zwischen 15 und 30 kPa, und bei Verwendung eines Zitzengummis mit einem Einfaltdruck von 5 kPa zwischen einer maximalen Druckdifferenz von 25 und 35 kPa und vorzugsweise 20 und 35 kPa. Hierbei sind die unteren Werte eines Bereiches jeweils dem niedrigen Melkvakuum von 35 kPa und die oberen Wertes des Bereiches einem Melkvakuum von 50 kPa zugeordnet, während die dazwischenliegenden Werte entsprechend den zwischen 35 und 50 kPa liegenden Melkvakua zuzuordnen sind.

Die angegebenen Werte für die Druckdifferenzen unter den angegebenen Bedingungen beziehen sich im wesentlichen auf die maximalen Druckdifferenzen, die bei längerer Anwendung nach Möglichkeit nicht überschritten werden sollten. Selbstverständlich sind aber in allen Fällen auch niedrigere Druckdifferenzen zulässig, sofern die Druckdifferenz etwa 5 kPa nicht unterschreitet.

## Patentansprüche

1. Verfahren zum maschinellen Milchentzug bei dem während des Abmelkens der Milch unterhalb der Zitze ein im wesentlichen konstantes Melkvakuum anliegt, wobei die abgemolkene Milch mit Hilfe eines niedrigen, im wesentlichen konstanten, in die Milchabführleitung eingelassenen Luftstroms abtransportiert wird und in einem zwischen dem die Zitze umgebenden Zitzengummi und einem Melkbecher gebildeten Pulsatorraum der Druck jeweils derart gesteuert wird, daß sich während einer Zitzen-Entlastungsphase eine Druckdifferenz in bezug auf das unterhalb der Zitze anliegende Melkvakuum einstellt, **dadurch gekennzeichnet,** daß die Druckdifferenz während der Zitzen-Entlastungsphase derart gewählt wird, daß unter Berücksichtigung eines je nach der Art des verwendeten Zitzengummis für das Einfalten des Zitzengummis notwendigen Druckes eine Druckdifferenz zwischen 5 kPa und 35 kPa auf die Zitze einwirkt.

2. Verfahren nach Anspruch 1, **dadurch gekennzeichnet,** daß bei Verwendung von Zitzengummis mit einem Einfaltdruck zwischen 5 kPa und 24 kPa der maximale Differenzdruck in Abhängigkeit von dem Einfaltdruck zwischen 35 kPa und 10 kPa liegt.

3. Verfahren nach einem der Ansprüche 1 oder 2, **dadurch gekennzeichnet,** daß bei Verwendung eines Melkvakuums von 40 kPa unterhalb der Zitze und Verwendung eines Zitzengummis mit einem Einfaltdruck zwischen 12 und 24 kPa eine Druckdifferenz von maximal 20 bis 10 kPa verwandt wird.

4. Verfahren nach einem der Ansprüche 1 oder 2, **dadurch gekennzeichnet,** daß bei Verwendung eines Melkvakuums von 40 kPa unterhalb der Zitze und bei der Verwendung von Zitzengummis mit einem Einfaltdruck zwischen 5 und 11 kPa eine maximale Druckdifferenz zwischen 25 und 20 kPa verwandt wird.

5. Verfahren nach einem der Ansprüche 1 oder 2, **dadurch gekennzeichnet,** daß bei Verwendung eines Melkvakuums von 50 kPa unterhalb der Zitze und der Verwendung von Zitzengummis mit einem Einfaltdruck zwischen 12 und 24 kPa eine Druckdifferenz zwischen 30 und 20 kPa gewählt wird.

6. Verfahren nach einem der Ansprüche 1 oder 2, **dadurch gekennzeichnet,** daß unter Verwendung eines Melkvakuums von 50 kPa unterhalb der Zitze und von Zitzengummis mit einem Einfaltdruck zwischen 5 und 11 kPa eine maximale Druckdifferenz verwandt wird, die zwischen 35 und 30 kPa liegt.

7. Verfahren nach einem der Ansprüche 1 oder 2, **dadurch gekennzeichnet,** daß in Abhängigkeit von einem zwischen 35 und 50 kPa liegenden unter der Zitze wirksamen Melkvakuum die maximal während der Zitzen-Entlastungsphase auf die Zitze wirkende Druckdifferenz bei Verwendung eines Zitzengummis mit einem Einfaltdruck von 24 kPa zwischen 5 und 20 kPa, bei Verwendung eines Zitzengummis mit einem Einfaltdruck von 11 kPa zwischen 15 und 30 kPa und bei Verwendung eines Zitzengummis mit einem Einfaltdruck von 5 kPa zwischen 20 und 35 kPa liegt.

## Claims

1. A method of mechanically extracting milk in the case of which a substantially constant milking vacuum is applied below the teat while the milk is being milked, the milked milk being discharged with the aid of a small, substantially constant stream of air introduced in the milk discharge line and the pressure in a pulsator chamber, which is formed between the teat rubber surrounding the teat and a teat cup, being respectively controlled in such a way that, during a teat relief phase, a pressure difference with regard to the milking vacuum applied below the teat will be established, **characterized in that** the pressure difference during the teat relief phase is chosen such that, with due regard to a pressure which is required for folding in the teat rubber and which depends on the respective teat rubber used, a pressure difference between 5 kPa and 35 kPa acts on the teat.

2. A method according to claim 1, **characterized in that,** when a teat rubber is used whose fold-in pressure lies between 5 kPa and 24 kPa, the maximum pressure difference will lie between 35 kPa and 10 kPa depending on the fold-in pressure.

3. A method according to one of the claims 1 or 2, **characterized in that,** when a milking vacuum of 40 kPa is used below the teat and when a teat rubber having a fold-in pressure between 12 and 24 kPa is used, a maximum pressure difference of 20 to 10 kPa will be used.

4. A method according to one of the claims 1 or 2, **characterized in that,** when a milking vacuum of 40 kPa is used below the teat and when a teat rubber having a fold-in pressure between 5 and 11 kPa is used, a maximum pressure difference of 25 to 20 kPa will be used.

5. A method according to one of the claims 1 or 2, **characterized in that,** when a milking vacuum of 50 kPa is used below the teat and when a teat rubber having a fold-in pressure between 12 and 24 kPa is used, a pressure difference between 30 and 20 kPa will be chosen.

6. A method according to one of the claims 1 or 2, **characterized in that,** when a milking vacuum of 50 kPa is used below the teat and when teat rubbers having a fold-in pressure between 5 and 11 kPa are used, a maximum pressure difference will be used which lies between 35 and 30 kPa.

7. A method according to one of the claims 1 or 2, **characterized in that,** depending on a milking vacuum which is effective below the teat and which lies between 35 and 50 kPa, the maximum pressure difference acting on the teat during the teat relief phase lies between 5 and 20 kPa when a teat rubber having a fold-in pressure of 24 kPa is used, between 15 and 30 kPa when a teat rubber having a fold-in pressure of 11 kPa is used, and between 20 and 35 kPa when a teat rubber having a fold-in pressure of 5 kPa is used.

## Revendications

1. Procédé de traite mécanique dans lequel, pendant la traite, le lait situé au-dessous du trayon est soumis à un vide de traite sensiblement constant, le lait tiré étant évacué à l'aide d'un courant d'air faible, sensiblement constant, admis dans la conduite d'évacuation du lait, et la pression régnant dans une chambre à pulsations formée entre le manchon de trayon en caoutchouc qui entoure le trayon et un gobelet trayeur étant commandée de manière que, pendant une phase de soulagement du trayon, il s'établisse une différence de pression par rapport au vide de traite régnant au-dessous du trayon, caractérisé en ce que la différence de pression pendant la phase de soulagement du trayon est choisie de manière que, pour tenir compte d'une pression nécessaire pour déplisser le manchon de trayon en caoutchouc, qui varie avec la catégorie du manchon de trayon en caoutchouc utilisé, une différence de pression d'entre 5 kPa et 35 kPa agisse sur le trayon.

2. Procédé selon la revendication 1, caractérisé en ce que, lorsqu'on utilise un des manchons de trayon en caoutchouc possédant une pression de déplissage d'entre 5 kPa et 24 kPa, la pression différentielle maximale se trouve entre 35 kPa et 10 kPa, selon la pression de déplissage.

3. Procédé selon l'une des revendications 1 et 2, caractérisé en ce que, lorsqu'on utilise un vide de traite de 40 kPa au-dessous du trayon et des manchons de trayon en caoutchouc possédant une pression de déplissage d'entre 12 et 24 kPa, on utilise une différence de pression de 20 à 10 kPa au maximum.

4. Procédé selon l'une des revendications 1 et 2, caractérisé en ce que, lorsqu'on utilise un vide de traite de 40 kPa au-dessous du trayon et des manchons de trayon en caoutchouc possédant une pression de déplissage d'entre 5 et 11 kPa, on utilise une différence de pression maximale d'entre 25 et 20 kPa.

5. Procédé selon l'une des revendications 1 et 2, caractérisé en ce que, lorsqu'on utilise un vide de traite de 50 kPa au-dessous du trayon et des manchons de trayon en caoutchouc possédant une pression de déplissage d'entre 12 et 24 kPa, on choisit une différence de pression d'entre 30 et 20 kPa.

6. Procédé selon l'une des revendications 1 et 2, caractérisé en ce que, lorsqu'on utilise un vide de traite de 50 kPa au-dessous du trayon et des manchons de trayon en caoutchouc possédant une pression de déplissage d'entre 5 et 11 kPa, on utilise une différence de pression maximale qui se trouve entre 35 et 30 kPa.

7. Procédé selon l'une des revendications 1 et 2, caractérisé en ce qu'en fonction d'un vide de traite d'entre 35 et 50 kPa agissant sous le trayon, la différence de pression maximale qui agit sur le trayon pendant la phase de soulagement du trayon, est comprise entre 5 et 20 kPa lorsqu'on utilise un manchon de trayon en caoutchouc possédant une pression de déplissage de 24 kPa, entre 15 et 30 kPa lorsqu'on utilise un manchon de trayon en caoutchouc ayant un pression de déplissage de 11 kPa, et entre 20 et 35 kPa lorsqu'on utilise un manchon de trayon en caoutchouc possédant une pression de déplissage de 5 kPa.
